Europäisches Patentamt

European Patent Office

Office européen des brevets

(19)

(11) Veröffentlichungsnummer: **0 172 245 B1**

(12) **EUROPÄISCHE PATENTSCHRIFT**
veröffentlicht nach Art. 158 Abs. 3
EPÜ

(45) Veröffentlichungstag der Patentschrift: **24.07.91**

(21) Anmeldenummer: **85901404.5**

(22) Anmeldetag: **21.02.85**

(86) Internationale Anmeldenummer:
**PCT/EP85/00060**

(87) Internationale Veröffentlichungsnummer:
**WO 85/03621 (29.08.85 85/19)**

(51) Int. Cl.5: **A23C 9/18**, A23L 1/305,
A23L 1/314, A23L 1/325,
A23C 9/123

(54) **Verfahren zur Herstellung von weitgehendst naturbelassenen energie-und nährwerteinstellbaren Lebensmitteln.**

(30) Priorität: **21.02.84 CH 818/84**

(43) Veröffentlichungstag der Anmeldung:
**26.02.86 Patentblatt 86/09**

(45) Bekanntmachung des Hinweises auf die
Patenterteilung:
**24.07.91 Patentblatt 91/30**

(84) Benannte Vertragsstaaten:
**AT BE CH DE FR GB LI LU NL SE**

(56) Entgegenhaltungen:
EP-A- 0 009 219      DE-A- 2 639 177
FR-A- 2 156 854      GB-A- 2 018 123
US-A- 2 560 621      US-A- 2 565 098

Journal of Food Science, Volume 47, Nr. 1,
January 1982, G.Ozimek: "Influence of an
addition of textured milk proteines upon
physicochemical properties of meat mixtures", see page 234, column 2; tables I to IV

(73) Patentinhaber: **Interproduct IP AG**
**Baarerstrasse 36**
**CH-6300 Zug(CH)**

(72) Erfinder: **LAUFER, Wolfgang**
**Hauptstr. 27**
**W-8130 Starnberg(DE)**

(74) Vertreter: **Laufer, Wolfgang**
**Patentanwalt Dipl-Chem.**
**Dr.Rer.Nat.Wolfgang Laufer Hauptstrasse 27**
**W-8130 Starnberg(DE)**

**Beschreibung**

Die Erfindung betrifft ein neuartiges Verfahren zur Herstellung von weitgehendst naturbelasenen energie- und nährwerteinstellbaren Lebensmitteln, die mittels einer innovativen, schonenden Herstellungstechnologie produziert werden. Mit Hilfe dieser neuen, als MM-Technologie bezeichneten Herstellungstechnologie kann eine breitgefächterte Produktgruppevon im wesentlichen auf Milch/Fleischbasis hergestellten Lebensmitteln erzeugt werden.

Die Zusammensetzung und der Kaloriengehalt der neuen Milchzubereitungen kann durch die Wahl und die Bearbeitung der Ausgangsstoffe wunschgemäß programmiert werden, so daß sowohl Produkte mit hohem, als auch mit niedrigem Brennwert hergestellt werden können, die jedoch immer eine optimale Kombination von hohem Genußwert und Nährwert einer verbesserten Haltbarkeit und einem vorteilhaften Gebrauchswert besitzen.

Eine bevorzugte Produktgruppe im Rahmen der neuen MM-Produkte zeichnet sich durch einen sehr niedrigen Fettgehalt und einen stark reduzierten Brennwert (kalorienarme MM-Produkte) aus, in Relation zu vergleichbaren, auf dem Markt angebotenen Erzeugnissen.

Die neue MM-Technologie läßt sich auch für die Herstellung neuartiger Futtermittel für die Tier- und Fischfütterung verwenden.

Die nach der neuen Technologie hergestellten Produkte zeichnen sich nicht nur durch ihre vorteilhaften ernährungsphysiologischen Eigenschaften und ihrer ausgewogenen Zuzsammensetzung aus, sie sind auch besonderes preiswert in ihrer Herstellung. Aufgrund der Herstellung und des Vertriebs der MM-Produkte ist in wirtschaftlicher Hinsicht ein wesentlich erhöhter Verbrauch an Milch- und Fleischerzeugnissen zu erwarten.

Die nach der neuen MM-Technologie hergestellten Produkte eignen sich auch insbesondere für gesundheitspolitische Maßnahmen, da diese zur Vorsorge im Rahmen einer primärpräventiven Gesundheitssicherung und -erziehung gezielt eingesetzt ewrden können und von wesentlicher volkswirtschaftlicher Bedeutung sein dürften.

In der folgenden Tabelle wird eine übersicht über die MM-Produkte gegeben, wobei je nach Zusammensetzung der Verfahrensführung MM-Produkte vom KFA-Typ (kalorien- und fettarm) sowie vom ENE-Typ (energie- und nährwerteingestellt) erzeugt werden können.

**MM-PRODUKT-ÜBERSICHT**

| Spezifische Eigenschaften | MM-Produkt-Typ | Gemeinsame Eigenschaften |
|---|---|---|
| - kalorien- und fettarm, ca. 80 - 140 kcal (ähnlich wie mageres Fleisch oder Quark)<br>- ausgewogene und nährwertverbesserte Zusammensetzung (im Vergleich zu herkömmlicher Wurst oder Milchprodukten)<br>- hohe biologische Wertigkeit aufgrund komplexer Zusammensetzung<br>- Verwendung insbesondere in Industrieländern | KFA-Typ | - programmierbare, vielseitige Zusammensetzungsmöglichkeiten auf Milch-/Fleischbasis<br>- keine chemischen Zusätze sowie keine Verwendung chemisch behandelter Substanzen<br>- Herstellung in Art von Brüh- und Kochwurst- sowie Milcherzeugnissen<br>- Geschmack und Konsistenz wie herkömmliche vergleichbare Erzeugnisse<br>- Herstellung in Form von Frischprodukten, Konserven oder in Trockenform<br>- erfüllen ernährungsmedizinische und gesundheitspolitische Forderungen<br>- Vermarktung als allgemeines Lebensmittel sowie als spezielle Diätprodukte<br>- Verwendung von überschüssigen Milch- und Rindfleischerzeugnissen<br>- preiswerte Produktion<br>- verbesserte Haltbarkeit |
| - energie- und nährwerteinstellbar<br>- gezielt einstellbare Zusammensetzung entsprechend regionaler Erfordernisse und unter Verwendung lokaler Rohstoffe<br>- gute Verträglichkeit aufgrund der Bindung der Milchkomponente<br>- Verwendung insbesondere in Entwicklungs- und Schwellenländern | ENE-Typ | |

Die ernährungsmedizinische Situation bei den Verbrauchern war ein wesentlicher Ausgangspunkt für die Entwicklung der MM-Produkte. Es ist bekannt, daß in den letzten Jahrzehnten insbesondere in Industrieländern ernährungsbedingte Krankheiten in hohem Grade zugenommen haben und als Zeit- und Volkskrankheiten anzusehen sind. Ein großer Teil der Bevölkerung in der Schweiz, in der Bundesrepublik Deutschland, in Österreich sowie in anderen Ländern leidet an Übergewicht aufgrund der Einnahme von zu viel Lebensmitteln und vor allem von Lebensmitteln mit zu hohem Fettgehalt.

Bei den verschiedenen und allgemeinen Untersuchungen des Ernährungszustandes in der Bundesrepublik konnte man insbesondere feststellen, daß

1. eine energetische Überernährung,

2. eine unzureichende Deckung des Bedarfs an essentiellen Nährstoffen und

3. eine Belastung durch unerwünschte Inhaltsstoffe in der Nahrung vorliegt.

Diese Entwicklung, die also in erster Linie aus Fehl- und Überernährung resultiert, führt zu einer Minderung der Lebensqualität und Lebenserwartung und zu Krankheiten wie Adipositas, Atherosklerose, cardiovaskuläre Krankheiten, essentielle Hypertonie, Diabetes, Fettleber mit chronischer Hepatitis, Leberzirrhose als Folge udgl.

In den meisten Industrieländern sind insbesondere die Herz- und/oder Kreislaufkrankheiten eines der bedeutendsten Gesundheitsprobleme. Jeder zweite stirbt an einer derartigen Krankheit, viele vorzeitig. Die Herz- und Kreislaufkrankheiten sind der häufigste Grund für Krankenhauseinweisungen und verursachen hohe Kosten, die z.B. in der Schweiz (ca. 6 Mio. Einwohner) etwa 15 % an direkten Kosten des Gesundheitswesens ausmachen, d.h. nicht weniger als ca. 2 Milliarden Schweizer Franken. Für die Bundesrepublik Deutschland dürfte ein der Bevölkerungszahl entsprechender Wert von mindestens 40 Milliarden D-Mark anzusetzen sein.

Der vorliegenden Erfindung lag die Aufgabe zugrunde, auf der Basis von Milch ernährungsphysiologisch hochwertige Lebensmittelprodukte herzustellen.

Maßnahmen gegen die ungesunde Ernährung der Bevölkerung bestanden bisher im wesentlichen darin, durch mannigfaltige Diätvorschläge gesundheitserzieherischen Einfluß auf das Ernährungsverhalten der Bevölkerung zu nehmen. Jedoch ist das Marktangebot an bedarfsangepaßten und dennoch wohlschmeckenden Wurstwaren, Pasteten und dergleichen äußerst gering.

Obwohl auf dem Markt einige diätetische Produkte (meist vegetabiler Herkunft) angeboten werden, die meist mittels komplizierter Verfahren und oft mit chemischen Bearbeitungen hergestellt werden, konnten bisher keine den MM-Produkten gleichwertigen Erzeugnisse mit der besonders vorteilhaften ernährungsphysiologischen Zusammensetzung aufgefunden werden.

Primär handelt es sich um lactovegetabile Produkte, die kaum Vorteile bezüglich einer Brennwertreduzierung bringen. Eine gewisse Fett- und Kalorienreduzierung wurde bei einigen wenigen Wurstwaren durch Ersatz des Fettes und Speckes durch mageres Fleisch erreicht. Solche Erzeugnisse sind naturgemäß sehr teuer (ca. SFr. 20,- bis SFr. 30,-/kg).

Aufgrund der oben geschilderten Ernährungssituation sowie unter Berücksichtigung der verschiedenen von der Fachwelt vorgeschlagenen ernährungstherapeutischen Konzepte lag dem vorliegenden Projekt die Aufgabe zugrunde, ein breitgefächertes Angebot von in der Zusammensetzung kalorienarmen und ernährungsphysiologisch ausgewogeneren Produkten zu schaffen, die den herkömmlichen Erzeugnissen dieser Art in Konsistenz und Geschmack mindestens entsprechen, jedoch im Nährwert wesentliche Verbesserungen aufzeigen.

Bei der Lösung dieser Aufgabe ging es und geht es primär auf der einen Seite um die Verringerung des Brennwertes der neu geschaffenen Produkte durch Substitution der Fettstoffe, auf der anderen Seite sollte der besondere und erhöhte Bedarf an essentiellen Nährstoffen berücksichtigt werden.

Die bisherigen Entwicklungs- und Untersuchungsarbeiten wurden unter besonderer Berücksichtigung des Rohproduktes Milch durchgeführt. Die Milch wird sowohl aufgrund ihrer besonders vorteilhaften Zusammensetzung, als auch als Erzeugnis der landwirtschaftlichen Produktion, das weiterhin im Überschuß vorhanden sein dürfte, für die direkte Verarbeitung als besonders geeignet angesehen.

Milch ist ein Lebensmittel mit einem sehr breiten Wirkungsspektrum und für alle Altersstadien der Menschen ein vorzügliches "Schutznahrungsmittel" im Rahmen der prophylaktischen Medizin und Sozialhygiene.

Die Milch enthält Proteine mit einer Fülle von biologisch aufeinander abgestimmten Aminosäuren, Fettsäuren verschiedenen Sättigungsgrades, Kohlenhydrate sowie eine Anzahl von essentiellen Wirkstoffen wie Vitamine, Mineralstoffe (insbesondere Calcium) und Spurenstoffe.

Aufgrund der ausgewogenen Zusammensetzung eignet sich die Milch vor allem in ihrer ursprünglichen Form nicht nur als Zutat für eine kalorienarme Vollschonkost für breite Bevölkerungsschichten, sondern auch als Zutat zu Diätkostvarianten bei der Prophylaxe und bei der Therapie z.B. der im vorgehenden Kapitel erwähnten Erkrankungen.

Es ist zwar bekannt, daß in vielerlei Arbeiten die verschiedensten Vorschläge gemacht werden, Milch, Milchpulver Molke oder andere meist chemisch bearbeitete Milchderivate als Bindemittel, Proteinzusatz oder dergleichen, vornehmlich in geringeren Mengen zuzusetzen. Es ist jedoch nicht vorgeschlagen oder nahegelegt worden, originäre Milch oder Milchemulsionen als wesentliche oder hauptsächliche Zutat in Wurst , Pasteten oder in anderen Lebensmitteln zu verarbeiten, da diese Anwendung den herkömmlichen Vorstellungen der Fachwelt in Hinsicht auf Konsistenz, Aussehen und Geschmack, insbesondere bei Wurst- und Pastetenerzeugnissen widerspricht.

Folgende grundsätzlichen Erkenntnisse wurden aus den bis-bisher entwickelten Technologien und Produkten gewonnen: Aufgrund bestimmter biochemischer und technologischer Überlegungen und Untersuchungen ergab sich die grundlegende Erkenntnis, daß eine spezielle Verfahrenstechnologie ausgearbeitet werden kann, welche die gemeinsame Verarbeitung von Milch und Fleisch und gegebenenfalls von anderen Bestandteilen verschiedenen Ursprungs und verschiedener Modifikationen nicht nur prinzipiell erlaubt, sondern auch die Herstellung einer breiten Palette von neuartigen "Milch-Fleisch-Produkten" sowie fett- und kalorienreduzierten Milchprodukten ermöglicht.

Aufgrund der speziellen und modifizierbaren MM-Technologie lassen sich je nach Bedarf die verschiedensten MM-Produkte herstellen, die Fleisch und Milch als Hauptzutaten enthalten, jedoch bei der Verwendung von üblichen Anteilen Fleisch einen vorwiegend wurst- oder pastetenartigen Charakter besitzen.

Da die herkömmlichen Wurst- und Pastetenprodukte aufgrund ihrer Herstellung meist Fettgehalte von 25 % bis weit über 50 % und Energiegehalte zwischen 250 kcal bis über 500 kcal/ /100 g enthalten, sollen bei der technologischen Produktentwicklung eine über 50 % liegende Brennwert- und Fettgehaltsreduzierung, eine Verbesserung des Gehaltes an essentiellen Nährstoffen, eine gute Konsistenz, ein guter Geschmack sowie eine gute Haltbarkeit erreicht werden.

Die grundsätzliche Lösung der Aufgabe liegt darin, daß mit herkömmlichen Brüh- und Kochwursterzeugnissen vergleichbare, MM-Produkte hergestellt werden können, die Fettgehalte zwischen 5 - 10 % und Brennwerte zwischen 90 - 140 kcal besitzen, wodurch die sonst üblichen Brennwerte wesentlich reduziert wurden. Dies obwohl in Fachkreisen eine Brennwertverminderung bis zu 40 % nicht für möglich gehalten wird, ohne angeblich die sensorische Qualität aufgrund fehlender Fett- und Speckanteile so zu verändern, daß sie vom Verbraucher abgelehnt wird. Die Behauptung, daß die üblichen Wurstprodukte mit weniger als 15 % Fett "lasch" schmecken, wurde widerlegt.

Aufgrund der MM-Technologie werden ursprüngliche Milch (Vollmilch oder Magermilch) oder Milchderivate (z.B. Vollmilchpulver oder Magermilchpulver) in Mengen bis zu 90 Anteilen der zwei Hauptzutaten Milch und Fleisch verwendet. Spezielle Zusätze wie z.B. Bindemittel und dergleichen sind bei dem MM-Verfahren nicht erforderlich.

Bei den MM-Produkten ergänzen sich die Milch- und Fleischbestandteile vorteilhaft in Bezug auf Aminosäuren und Fettsäuren (insbesondere essentielle Aminosäuren und Fettsäuren), Vitamine, Mineralstoffe und Spurenelemente.

Da die MM-Produkte in ihrer Zusammensetzung regelrecht "programmiert" werden können, ist z.B. auch eine Einarbeitung von Lipidkomponenten mit zusätzlichen essentiellen gesättigten und ungesättigten Fettsäuren möglich. Abgesehen von dem publizistischen Wettstreit auf dem Pflanzenfett-(Soja-) und Tierfett-(Milchfett-)Markt ist es weitgehend eine physiologische Tatsache, daß von den pflanzlichen Fetten nur Weizenkeimöl oder Sonnenblumenöl wegen des hohen Gehaltes an Vitamin E (antioxidative Wirkung, Sauerstoff-Ersparnis für das Myocard) diätetisch bzw. ernährungsphysiologisch von Vorteil sind.

Die herkömmlichen Wurst- und Pastetenerzeugnisse sind im Prinzip Fett-/Fleisch-Mischerzeugnisse, bei denen fast durchwegs ein bedeutend höherer Fettgehalt als Proteingehalt (Eiweißstoffe) vorhanden ist. Bei den MM-Schonkostprodukten ist dagegen der Proteingehalt bedeutend höher als der Fettgehalt und die Produkte sind dennoch wohlschmeckend.

Die von der Fachwelt allgemein aufgestellte Behauptung, daß das Wasserbindungsvermögen und die Fettemulgierung bei der Fleischverarbeitung bzw. bei der Wurstherstellung in einem komplizierten kolloidalen System wie es z.B. das Brühwurstbrät darstellt, vom Verhältnis von Fett, Wasser und Eiweiß im Brät abhängt und kein oder sehr wenig Fett (unter 25 %) Bräte mit sehr viel Geleeabsatz und nachteiligen sensorischen Eigenschaften ergibt, hat sich bei den nach dem MM-Verfahren hergestellten Produkten als nicht relevant herausgestellt.

Weiterhin konnte festgestellt werden, daß sich ein Zusatz von speziellen Bindemitteln und Fettemulgatoren wie z.B. aufgeschlossenem Milcheiweiß erübrigt, da bei dem MM-Verfahren natürliche, inhärente Bindefähigkeiten der tierischen Produkte Milch und Fleisch initiiert und genutzt werden.

Die MM-Produkte sind in gewisser Weise mit magerem Rindfleisch und magerem Schweinefleisch zu vergleichen, da sie ähnliche Protein-, Fett- und Wassergehalte besitzen. Aufgrund der Mitverarbeitung sämtlicher wertvoller Komponenten der Vollmilch wird trotz der niedrigen Kalorienzahl ein gegenüber mageren Fleischsorten verbesserter Nährwert und eine hohe biologische Wertigkeit erreicht.

Die MM-Produkte können als schnittfeste oder streichfähige Produkte hergestellt werden, die sowohl im kalten als auch im erwärmten Zustand, also gekocht, gebraten und dergleichen angerichtet werden können.

Im folgenden wird eine Zusammenstellung vorteilhafter Eigenschaften der MM-Produkte gegeben.

Ernährungsphysiologische Vorteile

- Hoher Grad an Naturbelassenheit durch wertschonende Technologie bei der Herstellung der MM-Produkte
- Hohes, ausgewogenes Potential an essentiellen Nährstoffen aufgrund einer vielseitigen Zusammensetzung an Proteinen, Fetten, Kohlenhydraten, Vitaminen, Mineralstoffen und Spurenstoffen in den zwei Hauptbestandteilen Fleisch und Milch
- Guter Geschmack ohne Zumischung von Schweinefett, Rindertalg oder dergleichen
- Gute Konsistenz ohne Verwendung von Bindemitteln und hohen Fettanteilen
- Gute Haltbarkeit und zum Teil verbesserte Haltbarkeit ohne besondere Zusätze wie Konservierungsstoffe udgl.
- Fett- und kalorienarm
- Deutlich geringere Kochsalz- und Natriumzufuhr
- Reichliche Zufuhr an Eisen und Kalzium
- Eigenschaften eines Grunddiät-Produktes
- Positive Zusammensetzung zur Regulierung der Stoffwechsel- und Kreislaufgrundfunktionen und dadurch besonders geeignet als Diätkost für Langzeiternährungs-Therapien
- Verwendung als standardisierte und preiswerte Krankenkost
- Verwendung als allgemeine Diätkost für Kinderhorte, Altersheime, Sanatorien udgl.
- Vielseitige Verwendung als Truppenverpflegung und für staatliche Lagerungsmaßnahmen udgl.
- Aufwertung der Milch als das Volksnahrungsmittel sowie Steigerung der Akzeptanz
- Wesentlich erhöhte Verwertungsmöglichkeiten und Verträglichkeit der Milch in Entwicklungsländern als aufgewertetes jedoch billigeres Milch-/Fleisch-Produkt

Volks- und privatwirtschaftliche Vorteile

- Durch erhöhten Verbrauch an Milchprodukten wesentliche Einsparungen an Subventionen sowie Abbau von Einlagerungen
- Geringere Verarbeitung von Milch zu Milchpulver, dadurch Einsparung von Energiekosten, Lagerungskosten und dergleichen
- Magermilch kann zu einem höherwertigen Mischprodukt mit Fleisch und insbesondere Überschuß-Rindfleisch verarbeitet werden
- Zusätzliche Sicherung landwirtschaftlicher Existenzen durch erhöhten Verbrauch an Milch und Milcherzeugnissen
- Wirtschaftliche sinnvolle Verwendung von Milch zur Herstellung von Nahrungsmitteln anstelle von Tierfutter
- Preiswertes Produkt aufgrund der in großen Mengen vorhandenen Ausgangsstoffe und der einfachen Technologie
- Anreiz für neue Unternehmen (handwerkliche oder industrielle Hersteller) jeder Größenordnung, da zusätzliche Verdienstmöglichkeiten
- Großes Verbrauchsvolumen schon allein für öffentliche Institutionen, Krankenhäuser, Kindergärten, Schulen, Betriebs- und Truppenkantinen usw.
- Bei gewissen Abnahmegarantien durch öffentliche Institutionen und Konsumenten werden zusätzliche Erträge bei den Herstellern gesichert, wodurch Beschäftigungsprogramme und Arbeitsplätze sichergestellt und geschaffen werden können
- Preisgünstiges Exportprodukt, z.B. für Entwicklungsländer
- Zusätzliche Absatzmöglichkeiten für einschlägige Maschinen- und Geräthersteller
- Mittel- und langfristig durch die Anwendung von MM-Produkten als Schonkost und Diätkost wesentliche Einsparungsmöglichkeiten im Gesundheitswesen

Verfahrenstechnische Vorteile

- Verhältnismäßig einfache Herstellungstechnologie
- Herkömmliche maschinelle Ausrüstungen können weiterverwendet werden
- Keine besonderen Anforderungen an das Herstellungspersonal
- Milch und Milchderivate als Ausgangsprodukte sowie die sonstigen Zutaten sind in ausreichender Menge, größtenteils im Überfluß vorhanden
- Die MM-Produkt-Vollkonserven sind in einfacher Weise herzustellen
- Die MM-Produkt-Grundmasse kann mit Hilfe üblicher Verfahren in Trockenform gebracht werden
  Die nach dem neuen Verfahren herstellbaren lebensmittel können sowohl schneidfähig als auch

EP 0 172 245 B1

streichfähig sein und eigenen sich zur Verarbeitung durch Braten, Grillen, Kochen, Dünsten udgl.

Die MM-Produkte werden gemäss dem beanspruchten Verfahren hergestellt.

Die nach dem MM-Verfahren herstellbaren MM-Produkte mit Fleischeinlage lassen sich in die üblichen Wurstsorten einordnen.

1 Brühwurst, fein
    1.1 Brühwurst
    1.2 Fleischwurst
    1.3 Gelbwurst
    1.4 Lyoner

2 Brühwurst, grob
    2.1 Bierwurst
    2.2 Jagdwurst
    2.3 Lyoner Schinkenwurst
    2.4 Bauernfrühstück
    2.5 Heidefrühstück
    2.6 Römerwurst
    2.7 Römerpastete

3 Brühwurst als Halbdauerware
    3.1 Rauchlyoner
    3.2 Tiroler
    3.3 Krakauer
    3.4 Kochsalami

4 Brühwurst mit groben Fleischeinlagen
    4.1 Bierschinken
    4.2 Mortadella
    4.3 Schinkenwurst, grob

5 Würstchen, Bockwurst u.ä.
    5.1 Bockwurst
    5.2 Knackwurst
    5.3 Frankfurter Würstchen
    5.4 Wiener Würstchen
    5.5 Würstchen jeder Art

6 Leberpasteten u.ä. Erzeugnisse
    6.1 Kalbsleberpastete
    6.2 Schinkenpastete
    6.3 Leber-Loaf
    6.4 Wildpastete
    6.5 Leberterrinen
    6.6 Lebercreme
    6.7 Geflügelleberpastete
    6.8 Fischpastete
    6.9 Crustazeenpastete
    6.10 Meeresfrüchtepastete

7 Leberwurst
    7.1 Leberwurst, fein
    7.2 Leberwurst, grob
    7.3 Kräuterleberwurst
    7.4 Braunschweiger Leberwurst

8 Fleischkäse, Leberkäse udgl.
    8.1 Fleischkäse
    8.2 Leberkäse
    8.3 Frühstücksfleisch

Weiterhin befinden sich einige von in der Art, im Geschmack und in der Zusammensetzung neuartige MM-Produkte auch als reine Milchprodukte in der Entwicklung oder es ist ihre Entwicklung und Untersuchung geplant.

Die nach der MM-Technologie hergestellten Milchzubereitungen lassen sich insbesondere in der Diätetik verwenden. In diätetischer Hinsicht sind die MM-Produkte (abgesehen von den für Entwicklungsländer vorgesehenen "Kraftprodukten") als kalorienarm, fettarm, vitamin- und mineralstoffangereichert, natriumreduziert und nährstoffverbessert anzusehen.

MM-Produkte wurden für folgende Grunddiät-Modifikationen entwickelt und können mittels der MM-Technologie adaptiert werden:

1. Grunddiätmodifikation bei Übergewicht, Adipositas und Fettleber von Erwachsenen (kalorienarme Grunddiät-Variante / allg. Reduktionskost)

2. Grunddiätmodifikation bei Übergewicht und Adipositas für Kinder und Jugendliche (kalorienarme, modifizierte Grunddiät-Variante)

3. Grunddiätmodifikation bei Hypertonie (natriumarme, kalorienarme Grunddiät-Variante)

4. Grunddiätmodifikation bei Atherosklerose für Senioren (Herzinfarktrisiko, Koronarsklerose, Herzinfarktrehabilitation, Zerebralsklerose und periphere atherosklerotische Gefäßkrankheiten) (kalorienarme, modifizierte Grunddiät-Variante / Seniorenkost)

5. Grunddiätmodifikation bei manifestem Diabetes (Kohlenhydratdefinierte, kalorienarme Grunddiät-Variante)

6. Grunddiätmodifikation bei Hypercholesterinämie/Hyperbeta-Lipoproteinämie (fettmodifizierte, kalorienarme Grunddiät-Variante)

7. Grunddiätmodifikation bei primärer Hyperurikämie und Gicht (Purinarme, kalorienarme Grunddiät-Variante)

8. Grunddiätmodifikation bei Ballaststoffmangel-Obstipation (Ballaststoffangereicherte, kalorienarme Grunddiät-Variante)

An spezielle diätetische Erfordernisse angepaßte sowie im Nährwert optimal eingestellte MM-Produktvarianten bieten sich insbesondere an bei Unterernährung, Störungen der Nahrungsaufnahme, Vitamin- und Mineralstoffmangel, Rekonvaleszenz, als Seniorenkost, als Kinderkost sowie für den Hochleistungssport.

In diesem Zusammenhang ist insbesondere darauf hinzuweisen, daß nach bisherigen Untersuchungen bestimmte, beim Verzehr von Milch und Milchprodukten auftretende, Intoleranzen aufgrund der gemeinsamen Verarbeitung mit Fleisch wesentlich reduziert oder vollständig beseitigt werden.

Bei der technologischen Herstellung der MM-Produkte, die auf der Verwendung von Milch und Milchprodukten als Hauptbestandteil beruht, können folgende Variationsmöglichkeiten bei den Zutaten in Anwendung kommen:

A) MM-Produkte auf Milchbasis

1) Mami (oder/und Vomi) + Bu/Öl *

2) Mami (oder/und Vomi) + Bu/Öl + E *

3) Mami (oder/und Vomi) + VMP + Bu/Öl (+ E) *

4) Mami (oder/und Vomi) + MMP + Bu/Öl (+ E)

5) MMP-(oder/und VMP-)Lösung + Bu/Öl (+ E) *

6) $A_1$ - $A_5$ + Käse

7) $A_1$ - $A_5$ + Quark

8) $A_1$ - $A_5$ + Yoghurt

9) $A_1$ - $A_5$ + Buttermilch

10) $A_1$ - $A_5$ + Molke

11) $A_1$ - $A_5$ + Honig

12) $A_1$ - $A_5$ + Kakao

13) $A_1$ - $A_5$ + Kaffee

14) $A_1$ - $A_5$ + Marzipan

15) $A_1$ - $A_5$ + Obsteinlagen

16) $A_1$ - $A_5$ + Gemüseeinlagen

17) $A_1$ - $A_5$ + Cerealeinlagen

18) $A_1$ - $A_5$ + Nußeinlagen

B) MM-Produkte als Fleisch/Milch-Mischungen

1) F + Mami *

2) F + Mami + MMP *

3) F + Mami + VMP

4) F + Vomi *

5) F + Vomi + MMP *

6) F + Vomi + VMP

7) F + MMP-Lösung *

8) F + VMP-Lösung

9) F + MMP-Lösung + VMP-Lösung

10) F + Mami + Bu

11) F + Vomi + Bu

12) F + MMP-Lösung + Bu *

13) F + VMP-Lösung + Bu

14) F + MMP-Lösung + VMP-Lösung + Bu

15) F + Mami + MMP + Bu *

16) F + Mami + VMP + Bu

17) F + Vomi + MMP + Bu

18) F + Vomi + VMP + Bu

19) F + Mami + E *

20) F + Mami + MMP + E

21) F + Mami + VMP + E

22) F + Vomi + E

23) F + Vomi + MMP + E *

24) F + Vomi + VMP + E

25) F + MMP-Lösung + E

26) F + VMP-Lösung + E

27) F + MMP-Lösung + VMP-Lösung + E

28) F + Mami + Bu + E

29) F + MMP-Lösung + Bu + E

30) F + Mami + MMP + Bin + E

31) F + GF + Mami + E

32) F + GF + MMP-Lösung + Bin + Öl

C) MM-Spezialitäten

1) $B_1$ - $B_{32}$ mit besonderen Fleischzusätzen (Wild, Geflügel, Eier udgl.)

2) $B_1$ - $B_{32}$ mit Pilz- und Gemüseeinlagen

3) $B_1$ - $B_{32}$ mit Fischzusatz *

4) $B_1$ - $B_{32}$ mit Käse- und Milchprodinkteinlagen

5) $B_1$ - $B_{32}$ mit Sojaeinlagen *

6) $B_1$ - $B_{32}$ mit Kartoffeleinlagen

Erklärungen der Abkürzungen:

| | | |
|---|---|---|
| Mami = | Magermilch | |
| Vomi = | Vollmilch | |
| MMP = | Magermilchpulver | |
| VMP = | Vollmilchpulver | |
| Bu = | Butter | |
| E = | Emulsion (bestehend aus Wasser, aufgeschlossenem Eiweiß, Milchpulver sowie Butter und/oder ein geeignetes Öl in wechselnden Zusammensetzungen) | |
| F = | Fleisch (Rinds-, Kalbs-, Schweinefleisch udgl.) | |
| GF = | Gefrierfleisch | |

In den folgenden Beispielen werden bevorzugte Ausführungsformen des Verfahrens und der Produkte nach der Erfindung im einzelnen erläutert.

Beispiel 1

Milchzubereitung in Art von Fleischkäs

7,5 kg Magermilch (oder Vollmilch) oder ein Gemisch von Magermilch und Vollmilch, (gegebenenfalls unter Zusatz von Molke) oder 5 kg Trinkwasser und 2,5 kg Magermilchpulver oder 7,5 kg Magermilch (oder Vollmilch), die mit 100 bis 2 000 g Magermilchpulver (oder Vollmilchpulver) versetzt worden sind, werden bei Temperaturen von ca. 10 bis 70 ° C in einem Kutter oder in einer anderen gründlich homogenisierenden Mischvorrichtung miteinander vermischt.

Nach der Bildung einer homogenen Mischung werden 300 g Butter oder 300 g Öl oder 600 g einer Mischung aus Butter und Öl in beliebigen Mischungsverhältnissen im Kutter zugesetzt. Diese Masse wird so lange bei Temperaturen zwischen etwa 20 bis 40 ° C gemischt, bis eine homogene Emulsion entstanden ist.

Es können nach Belieben andere Anteilsverhältnisse der Komponenten Magermilch, teilentrahmte oder teilentfettete Milch, Vollmilch, Magermilchpulver, Vollmilchpulver, Sonnenblumenöl, Butter, Lebertran oder anderer pflanzlicher und tierischer Öle und Fette oder aus Naturstoffe hergestellte Fettersatzstoffe, Ballaststoffe sowie Trinkwasser zueinander gewählt werden.

Als Emulsion kann auch alleine mit einer gründlich homogenisierten Milch bzw. Milchemulsion gearbeitet werden.

Die so hergestellte Emulsion wird auf Temperaturen unter etwa -4° C bis etwa -15° C gekühlt bis die Masse vollstandig durchgefroren ist.

Die so gefrorene Emulsionsmasse wird im Kutter zu gröberen oder feineren Bestandteilen je nach Weiterverarbeitung zerkleinert. Zu diesem Emulsions-Eis-Gemisch kann für die weitere Verarbeitung auch gegebenenfalls zum Zwecke der Verdünnung auch eine lediglich stark gekühlte Emulsion zugegeben werden, falls mehr pastöse Produkte erwünscht sind.

In das gefrorene Emulsionsgemisch wird im Kutter ein Fleisch-Grundbrät eingemischt, das beispielsweise a) aus 12 kg fein zerkleinertem Rindfleisch, 3 kg Mager- oder Vollmilcheis und 400 g Nitritpökelsalz oder b) 9 kg fein zerkleinertem Rindfleisch, 3 kg Magermilcheis (oder Vollmilcheis oder einer Mischung davon) und 400 g Nitritpökelsalz (NPS) hergestellt worden ist.

Als Kutter werden die üblicherweise für Fleisch- und Wurstprodukte benutzten Kutter verwendet. Bei der Verwendung von Vakuumkutter und Gefrierkuttern entstehen entsprechend modifizierte Produkte. Durch die Art der Messer und durch die Laufgeschwindigkeit des Kutters kann die Konsistenz des MM-Produktes und die Beschaffenheit insgesamt eingestellt werden. Die Verwendung eines Vakuumkutters hat sich als besonders vorteilhaft herausgestellt.

Wesentlich ist, daß in jeder Phase des Herstellungsvorganges die einzelnen Gemische bzw. Massen gründlich homogenisiert werden, bis die erforderliche Bindigkeit und Kosistenz geschaffen worden ist.

Zu der in oben angegebener Art und Weise hergestellten Masse werden dann in üblicher Weise Gewürze und weitere Zutaten wie Kräuter oder im Falle von Römerwurst oder Römerpastete grobe Fleischstücke beispielsweise bestehend aus gepökeltem Schweinefleisch oder Schinken eingearbeitet.

Die Gesamtmasse wird dann in üblicher Weise in Därme, Konservenbüchsen oder sonstige Behältnisse abgefüllt und bei Temperaturen von ca. 75° C gebrüht (und gegebenenfalls geräuchert) oder bei 110° C bis etwa 114° C je nach Herstellungsverfahren und Zutaten zu Konservenprodukten verarbeitet.

Anstelle des Nitritpökelsalzes kann auch normales Kochsalz verwendet werden oder Gemische von z.B. 1/3 Nitritpökelsalz und 2/3 Kaliumsalz oder Diätsalz. Hell gefärbte Fleischpasteten oder Fleischwürste können ohne Zusatz von NPS oder Nitrit oder Salpeter hergestellt werden.

Bei der Verwendung von Fertiggewürzen ist es vorteilhaft jeweils etwa 3 g pro kg Gesamtmasse zu verwenden. Gegebenenfalls kann auch 1 g Glutamat pro kg des Produktes und bei roter Pastete zusätzlich 1 g Ascorbinsäure pro kg des MM-Produktes zugesetzt werden.

## Beispiel 2

Herstellung von MM-Produkten in Art von Grill- und Bratprodukten

4 kg Magermilch und 1,666 g Magermilchpulver werden bei einer Temperatur von 20° C im Kutter fein homogenisiert. Nach Zusatz von 50 bis 300 g Butter und/oder Sonnenblumenöl oder ähnlichem Öl wird diese Emulsion auf eine Temperatur unter minus 4° C gekühlte Emulsion im Kutter homogenisiert.

Die so hergestellte dickflüssige stark unterkühlte Emulsion oder Emulsion in Art eines Eisschnee wird mit einem Fleischgrundbrät versetzt.

Dieses Fleisch-Grundbrät wird aus 10 kg Rindfleisch, 6 kg gefrorener Magermilch (oder gefrorener Vollmilch oder einer anderen Milchemulsion) und 300 g Kochsalz hergestellt.

Die so entstandene Gesamtmasse wird bei einer Temperatur von 0 - 14° C im Kutter homogenisiert. Dieser gesamten homogenisierten Masse werden Gewürze zugesetzt und zwar 3 g Gewürz pro kg Masse, 1 g Glutamat pro kg Masse und je nach Wurstart 1 g Majoran pro kg.

## Beispiel 3

MM-Produkte in Art von Frühstückspasteten (mit hohem Fleischanteil)

10 kg Vollmilch (oder Magermilch oder Vollmilch und/oder Magermilch-Mischungen) werden zu Milcheis gefroren und dann im Kutter fein zerkleinert und mit 25 kg gekühltem magerem Rindfleisch und 25 kg magerem Schweinefleisch gründlich vermischt.

Die Weiterverarbeitung erfolgt in üblicher Weise.

EP 0 172 245 B1

Anstelle der 10 kg Milcheis können auch 10 kg gefrorene Emulsion oder 10 kg gefrorenes Trinkwasser oder ein Gemisch aus 5 kg Milcheis und 5 kg gefrorenem Milcheis verwendet werden. Eine solche Emulsion wird beispielsweise hergestellt aus 5 kg Milch oder Milch-Trinkwasser-Mischungen sowie 2,5 kg Magermilchpulver oder Vollmilchpulver und 0,5 kg Sonnenblumenöl oder Butter oder Lebertran. Anstelle der Milch kann auch Molke oder ein anderes geeignetes Milchprodukt, Milchprodukt-Filtrate oder Konzentrate verwendet werden.

Das Schweinefleisch kann teilweise durch Pilzzugabe, Gemüsezugabe oder Cerealienzugabe ersetzt werden.

In diese Mischung können vor der Abfüllung auch 10 bis 35 kg grobes gegebenenfalls geräuchertes Schweinefleisch eingearbeitet werden und Cevapcici-Gewürz und gegebenenfalls Majoran (sowie Glutamat und Ascorbinsäure) verarbeitet werden.

Beispiel 4

MM-Produkte in Art von Milchmixerzeugnissen

10 kg Milcheis oder 10 kg Milchemulsionseis, die wie im Beispiel 3 hergestellt werden und mit 10 bis 50 kg grober oder feiner Gemüseeinlage verschiedenster Art oder Obsteinlage in geeigneter Weise vermischt werden. Dazu können beispielsweise Spargel, Spinat, Brocolli, Rosenkohl, Pflaumen, Äpfel, Kirschen, Melonen, Ananas und dergleichen verwendet werden.

Beispiel 5

MM-Produkte in Art einer Fischpastete oder eines Crustazeenprodukts

Zunächst wird eine Milchemulsion hergestellt, die aus 5 Anteilen Magermilch, 2,5 Anteilen Magermilchpulver und 0,5 Anteilen Sonnenblumenöl (oder Butter) besteht.

Die Emulgierung wird in vorteilhafter Weise in einem Kutter durchgeführt.

Die Emulsion wird dann gefroren. Die gefrorene Emulsion wird dann im Kutter zerkleinert. 3 kg der Emulsion werden mit 5 kg eines stark gekühlten oder gefrorenen Fischproduktes gründlich vermischt. Dieses Meerestierprodukt kann aus rohem, gekochtem oder geräuchertem Fisch, Fischfilet, Krabben-, Garnelen-, Krebs- und Hummerfleischprodukten (Extrakten) bestehen. Die so hergestelllte MM-Pastete kann in üblicher Weise mit entsprechenden Kräutern und Gewürzen versetzt werden.

Zu der obrigen aus Emulsion und Fischprodukt bestehenden Pastetenmasse kann ein stark gekühltes oder gefrorenes Fleisch-Grundbrät zugesetzt werden, das aus 10 kg magerem Rindfleisch (oder auch Schweinefleisch) 300 NPS und 3 kg gefrorener Magermilch im Kutter hergestellt worden ist.

Dieses Produkt wird in üblicher Weise zu dem MM-Produkt weiterverarbeitet. Anstelle der Emulsion (Wasser-Öl-Emulsion) kann auch einfaches Milcheis jeder Art oder Trinkwassereis verwendet werden.

Beispiel 6

MM-Produkt in Art einer Fischwurst

4 kg Vollmilch werden gefroren, zerkleinert und mit 10 kg Seefischfilet sowie Kochsalz und Gewürzen im Kutter gründlich vermischt.

Das Seefischfilet muß am besten vor der Verwendung 24 Stunden gewässert werden.

Gegebenenfalls kann in dieses Fischfleischbrät 2 - 4 kg gefrorene Emulsion, hergestellt aus 5,0 kg Molke, 2,5 kg Magermilchpulver und 0,500 kg Sonnenblumenöl (oder Butter) zugegeben werden.

Beispiel 7

MM-Produkt in Art einer Römerpastete

4 kg einer Emulsion, die aus 5 Anteilen Magermilch, 2,5 Anteilen Magermilchpulver und 0,5 Anteilen Sonnenblumenöl hergestellt und gefroren wurde, wird im Kutter mit einem Fleisch-Milch-Brät gründlich vermischt, das aus 10 kg magerem Rindfleisch, 6 kg gefrorener Magermilch und 400 g Nitritpökelsalz besteht.

Die gründlich vermischte Masse wird dann im Kutter mit 4 kg gekühltem Schweinefleisch versetzt.

11

Die so hergestellt Masse wird in üblicher Weise weiterverarbeitet.

Anstelle der Emulsion kann auch Milcheis verwendet werden. Auch mit Hilfe von Magermilchpulverzusatz oder Änderung der Art und Menge des Lipidzusatzes kann die Konsistenz des Endproduktes eingestellt werden.

Beispiel 8

MM-Produkt in Art von Leberpastete, Leberloaf, Wildleberpastete.

11 kg Magermilch wurden mit 2,5 kg Magermilchpulver, 1,0 kg aufgeschlossenem Milcheiweiß sowie 1,5 kg Butter oder Sonnenblumenöl oder Milchungen davon gründlich vermischt und gefroren.

Das aufgeschlossene Milcheiweiß wurde nur in Fällen zugesetzt, wenn besondere Konsistenzen erwünscht waren.

1 kg der obigen Emulsion wurden zusammen mit 2 kg gefrorener Leber im Kutter feinst zerkleinert unter Zugabe von 60 g Natriumchlorid oder 60 g Nitritpökelsalz vermischt.

In diese Masse wurde ein Fleischbrät eingearbeitet, das aus 5 kg Rindfleisch oder Wildfleisch, 4 kg Vollmilch und 160 g Nitritpökelsalz besteht.

Die Gesamtmasse wurdeweitervermischt und bis zu einer maximalen Temperatur von 14° C homogenisiert.

Die Würzung besteht aus 33 g Spezialgewürz, 32 g Glutamat, 32 g Ascorbinsäure, 30 g Zwiebelgewürz. Die Abfüllung und Garung wird bei 75° C bzw. 115° C durchgeführt und das Produkt wird in Terrinen mit Gelatineüberguß oder in Pastetenteig oder in Dosen oder in Gläsern abgefüllt und sterilisiert.

Beispiel 9

MM-Produkt in Art einer Fleischpastete

Als Emulsion kann z.B. eine homogene gefrorene Mischung aus 2,5 kg Magermilch, 2,3 kg Magermilchpulver und 0,3 kg Sonnenblumenöl bestehen.

5 kg gekühltes (oder gefrorenes) und fein zerkleinertes Rindfleisch werden sukzessive mit 5 kg gefrorener Vollmilch, Magermilch oder Emulsion im Kutter oder in einer anderen geeigneten Vorrichtung vermischt. Zu der homogenen Masse werden die erforderlichen Gewürze und Salze zugegeben.

Das Produkt wird in üblicher Weise weiterverarbeitet.

Beispiel 10

MM-Produkt in Art einer feinen Wiener Fleischwurst, Bologna, Extrawurst, Wiener Extra-Stangenwurst.

2,8 kg der Emulsion bestehend aus 11 Anteilen Magermilch, 2,5 Anteilen Magermilchpulver und 0,15 Anteilen Butter oder Öl werden auf - 10° C bis - 20° C gefroren und im Kutter mehr oder weniger fein zerkleinert. Dazu werden 8,2 kg Fleischbrät, bestehend aus 5 kg Rindfleisch, 3,0 kg Magermilch (0,5 bis 1,5 % Fett) und 200 g Nitritpökelsalz zugesetzt.

Nach vollständiger Homogenisierung im Kutter bei Temperaturen bis maximal 12 bis 14° C wurden Gewürze, Glutamat, Ascorbinsäure und Knoblauch in üblicher Menge dazugegeben.

Die Abfüllung erfolgte in Sterildarm, Naturdarm, Dosen, Gläser oder Terrinen. Der Garung wurde bei Temperaturen von 75 bis 105° C im heißen Ofen durchgeführt. Gegebenenfalls kann ein Gelatineüberguß mit eingearbeitet werden oder die Umhüllung aus Pastetenteig bestehen.

Beispiel 11

MM-Produkt in Art eines Brotaufstriches

2 kg Magermilch, 1 kg Magermilchpulver und 400 g Sonnenblumenöl, Butter oder Lebertran oder ein anderes Fett werden im Kutter homogenisiert und gefroren.

3,4 kg dieser Emulsion werden zusammen mit 1 kg bis 2 kg Trockenfruchtpulver (oder 1 kg Trockenfischpulver oder einer anderen Fischzubereitung) im Kutter bei Temperaturen von 4 bis 12° C und vorzugsweise bei 10° C homogenisiert.

Die Weiterverarbeitung erfolgt in üblicher Weise.

Beispiel 12

MM-Produkt nach Art einer Kräuterpastete

Bei der hier verwendeten Emulsion werden 10 Anteile Molke oder Magermilch mit 5 Anteilen Magermilchpulver (gegebenenfalls 0,5 Anteile aufgeschlossenes Milcheiweiß) und 1,0 Anteile Sonnenblumenöl und/oder Butter vermischt und gefroren.

12 kg der so hergestellten und gefrorenen Emulsion wurden im Kutter bei Temperaturen unter -10° C feinstzerkleinert.

Anschließend wurde ein auf etwa 10° C gekühltes Fleischbrat bestehend aus 11 kg Rindfleisch, 3 kg Magermilch und 200 g Nitritpökelsalz im Kutter eingearbeitet und die Gesamtmasse homogenisiert in einem Temperaturbereich von etwa 8 bis max. 14° C.

Als Würzung wurden 75 g Fertiggewürz, 40 g Glutamat und 40 g Ascorbinsäure verwendet.

Die Abfüllung im Sterildarm oder offenen Behältnissen und die Garung und Sterilisation geschieht unter üblichen Bedingungen.

4,5 kg der gefrorenen Emulsion können auch im Kutter feinzerkleinert werden und mit einem Fleisch-Grundbrät versetzt werden, das aus 10 kg Rindfleisch, 6 kg fettarmer Magermilch und 400 g NPS besteht. Die weitere Verarbeitung wie oben unter Zugabe eines Kräuterpastetengewürzes.

Beispiel 13

MM-Produkt in Art eines Kinder-Brotaufstriches

Aus 1,9 kg Magermilch, 0,5 kg Magermilchpulver, 2 kg Butter und 100 g Sonnenblumenöl (oder auch Lebertran) wird eine Emulsion hergestellt und gefroren.

4,5 kg dieser gefrorenen Emulsion wird im Kutter fein zerkleinert und mit 500 g Soja, Vollsoja oder Nußmehl, oder Trockenfruchtpulver gemischt mit ganzen Äpfel- oder Birnenstücken vermischt und zu einer feinen Masse verarbeitet und homogenisiert.

Weiterverarbeitung in üblicher Weise.

Beispiel 14

MM-Produkt in Art eines Brotaufstriches mit Kakao

Aus 3,5 kg Buttermilch, 1 kg Magermilch, 1,5 kg Magermilchpulver, 1,5 kg Butter und 100 g Sonnenblumenöl oder vitaminisiertem Weizenkeimöl wird eine Emulsion hergestellt und gefroren. 6,5 kg dieser Emulsion werden im Kutter zerkleinert und mit 200 g Zucker sowie 300 g Kakaopulver versetzt, homogenisiert und zu einer einheitlichen Masse verarbeitet.

Die Emulsion kann zum Teil aber vollständig (wie beschrieben) durch Milcheis ersetzt werden.

Die Konsistenz kann wie beschrieben eingestellt werden.

Beispiel 15

MM-Produkt in Art eines Halbfett- oder Viertelfett-Kinderaufstriches.

3,8 kg Magermilch, 1 kg Magermilchpulver sowie 200 g Sonnenblumenöl werden im Kutter homogenisiert und gefroren.

2 kg dieser Emulsion werden bei Temperaturen zwischen 4 bis 14° C unter Zugabe von 0,5 kg Magermilchpulver versteift und homogenisiert und dann mit 1500 g Butter oder 1500 g Margarine oder einer Mischung aus 750 g Butter und 750 g Margarine versetzt und gründlich homogenisiert. Der Anteil der Fettkomponente kann auch halbiert werden.

Die Masse wird in Becher, Dosen oder dergleichen abgepackt und in üblicher Weise weiterverwertet.

Beispiel 16

MM-Produkt in Art einer Lebercreme

Bei diesem Beispiel wurde eine Emulsion verwendet, die hergestellt wurde aus 5 kg Magermilch oder Molke, 2,5 kg Magermilchpulver und 360 kg Sonnenblumenöl und/oder Butter.

4 kg dieser Emulsion wurden auf -4°C gekühlt bzw. gefroren und mit 1 kg Leber im Kutter feinstzerkleinert zusammen mit 200 g Zwiebeln und 100 g Natriumchlorid oder NPS. Die ganze Masse wurde gründlich homogenisiert und in üblicher Weise gewürzt, abgefüllt und gegart weiterverarbeitet.

Beispiel 17

MM-Produkte in Art einer Frühstückspastete oder Luncheon-Pastete

Bei der Herstellung dieser Frühstückspastete werden zunächst 7 kg Emulsion aus 5 kg Vollmilch, 2 kg Magermilchpulver und 50 g Butter oder Sonnenblumenöl hergestellt und gefroren.

Die gefrorene Emulsionsmasse wird mittelgrob zerkleinert und mit 5 kg Magermilch und 5 kg magerem Rindfleisch im Kutter fein vermischt und homogenisiert.

Anstelle der 5 kg Rindfleisch können auch 2,5 kg mageres Rindfleisch und 2,5 kg Schweinefleisch verarbeitet werden. Ebenfalls kann anstelle des Rindfleisches oder Rindfleisches und Schweinefleisches, Wildfleisch, Geflügelfleisch und dergleichen verwendet werden.

Die weitere Verarbeitung geschieht in üblicher Weise.

Beispiel 18

MM-Produkt in Art eines Schweizer Fleischkäs

Aus 5 kg Magermilch, 2,5 kg Magermilchpulver und 360 g Sonnenblumenöl wird im Kutter eine Emulsion hergestellt und gefroren.

Aus 5 kg magerem Rindfleisch, 1,5 kg Magermilch und 100 g NPS oder Natriumchlorid wird im Kutter ein Fleisch-Grundbrät hergestellt und stark gekühlt oder gefroren.

Dieses Fleisch-Grundbrät und die gefrorene Emulsion werden im Kutter vermischt und die homogene Masse in üblicher Weise mit 40 g Gewürze, 20 g Glutamat und 20 g Ascorbinsäure versetzt.

Abfüllung und Weiterverwendung werden in üblicher Weise durchgeführt

Beispiel 19

MM-Produkt in Art einer Lemon- oder Orangecreme

Aus 5 kg Milch, Buttermilch oder Molke, 1,25 kg Magermilchpulver, 500 g Caseinat und 750 g Butter wird eine einheitliche Emulsion hergestellt und gegebenenfalls gefroren.

1 kg dieser Emulsion wird im Kutter bei Temperaturen von 8 bis 18°C mit 30 bis 60 g Zitronen- oder Orangensaft und 30 bis 60 g Zucker verarbeitet zu einer einheitlichen Masse, die üblicherweise weiterverwendet wird. Anstelle der Sacharose kann auch Fruchtzucker verwendet werden.

Ballaststoffe können in üblicher Weise eingemischt werden.

Beispiel 20

MM-Produkt in Art einer Quark-Honig-Speise

5 kg Milch, Molke oder Wasser werden mit 2,0 kg Magermilchpulver, 0,5 kg Butter und 100 g Milcheiweiß zu einer homogenen Masse verarbeitet. Durch Weglassen des Milcheiweißes kann eine weichere Konsistenz erreicht werden.

1 kg dieser Emulsion wird im Kochkutter mit Zitronensaft (2 bis 5 Zitronen) und 100 bis 200 g Honig feinst vermischt und auf Temperaturen zwischen 10 und 108°C erhitzt. Die Abfüllung erfolgt in Gläser, Dosen, Becher oder dergleichen.

Die obige Verarbeitung kann auch ohne Zugabe von Honig geschehen. Honig wird dann als Deckschicht aufgetragen und die Behälter werden anschließend verschlossen.

Beispiel 21

MM-Produkt in Art eines Joghurtproduktes

Eine Emulsion wird hergestellt aus 10 kg Milch, 2,5 kg Magermilchpulver, 1,5 kg Butter und gegebenenfalls 500 g aufgeschlossenem Milcheiweiß und gefroren.

10 kg dieser Emulsion werden mit 1 bis 2 kg Frischjoghurt im Kutter bei Temperaturen zwischen 25 bis 45° C vermischt und üblicherweise weiterverarbeitet.

Gegebenenfalls kann eine Starterkultur eines beliebigen Keimes (Lacto bacillus bulgaricus) der Emulsion schonend zugesetzt werden. Die Abfüllung erfolgt in Gläsern oder Bechern. Die Gärung kann bie 40 bis 45° C erfolgen und die Lagerung bei 4 bis 8° C.


Beispiel 22


MM-Produkt in Art eines Zitronen-Joghurt


Eine Emulsion wird hergestellt aus 10 kg Milch, 5 kg Magermilchpulver und 0,5 kg Butter. Diese Emulsion wird gefroren.

Die oben hergestellte Emulsion wird nach Zusatz der Starterkultur und nach Reifung im Großgefäß nach Abschluß der Reifung mit 2 bis 5 % Zitronensaft und 5 bis 10 % Zucker (Fruchtzucker versetzt und im Kutter gut vermischt. Unter Umständen kann dieser Mischung zur weiteren Festigung Gelatine, Pectine oder ähnliches zugesetzt werden.

Die Weiterverarbeitung erfolgt in üblicher Weise.

Anstelle der Emulsion kann erfindungsgemäß Milcheis verwendet werden.


Beispiel 23


MM-Produkt in Art eines Obstpuddings


Eine Emulsion wird hergestellt aus 2 kg Magermilch, 1 kg Magermilchpulver sowie 400 g Sonnenblumenöl und/oder Butter und/oder Lebertran und/oder einem anderen geeigneten Fett. Die homogenisierte Mischung wird gefroren.

3 kg der oben hergestellten Emulsion werden im Kutter fein, zerkleinert und zusammen mit 1 bis 2 % Zitronensaft (oder Zitronensäure oder anderen Obstextrakten, Obstkonzentraten und/oder Obstaromen) , 2 bis 3 % Zucker sowie 2 bis 5 % Gewürzen vermischt und homogenisiert.

Diese Masse wird dann im Kutter bzw. Kochkutter bei Temperaturen von 90 bis 105° C. homogenisiert und anschließend in üblicher Weise abgefüllt und weiterverarbeitet.

Gegebenenfalls können in die Masse fein zermahlene Obstprodukte, Obstteile oder auch ganze Obstteilchen hineingegeben werden.


Beispiel 24


MM-Produkt in Art einer "Kraftpastete"


Hierbei wurde eine Emulsion verarbeitet, bestehend aus 10 Anteilen Magermilch, $H_2O$ oder Molke, 5 Anteilen Magermilchpulver und 2 Anteilen Sonnenblumenöl oder Butter oder einem ernährungsphysiologisch geeigneten Gemisch aus pflanzlichen und/oder tierischen Fetten.

4 kg dieser Emulsion wurden gefroren (bis -10 bis -40° C) und im Kutter feinzerkleinert. Dazu wurden 4,2 kg Fleischbrät zugesetzt bestehend aus 3 kg Rindfleisch, Putenfleisch, Hasenfleisch, Wildfleisch oder Mischungen davon, 1 kg Magermilch oder Vollmilch und 160 g Nitritpökelsalz oder Natriumchlorid. Dieser homogenisierten Masse wurden nach Bedarf Gewürze, Glutamat, Ascorbinsäure und Fleischextrakt zugesetzt und diese in üblicher Weise weiterverarbeitet.

Zwecks Erhöhung des Protein- und Energiegehaltes können Sojaprodukte und/oder Fischprodukte oder weiteres Magermilchpulver, Vollmilchpulver, Proteinextrakte oder geeignete essentielle Aminosäuren, Lipide, Lipoide, Kohlenhydrate oder sonstige Wirkstoffe eingearbeitet werden.

In üblicher Weise können Ballaststoffe wie Weizenkleie oder dergleichen zugesetzt werden, aber auch Vitamine und/oder Mineral- und Spurenstoffe in wässriger oder organisch gebundener Phase in der Emulsion eingemischt werden.


Beispiel 25


MM-Produkt in Art von Räucherfisch

EP 0 172 245 B1

Hierzu wird eine Emulsion verwendet, die aus 5 kg Magermilch oder Molke, 2,5 kg Magermilchpulver und 360 g Sonnenblumenöl und/oder Butter und 14o g Gewürzen und Salzen besteht. Die Emulsion kann ganz oder teilweise durch bis zu 8 kg homogenisierte gefrorene Mager- und/oder Vollmilch ersetzt werden.

8 kg dieser Emulsion wurden gefroren und im Kutter feinstzerkleinert und zusammen mit 1,5 kg geräuchertem, gekühltem Fisch und 100 g Natriumchlorid homogenisiert. Der Fischanteil kann nach Belieben erhöht oder erniedrigt werden. Die Würzung wird nach Belieben durchgeführt und gegebenenfalls Ascorbinsäure und/oder Glutamat zugegeben. Die Abfüllung und Weiterverarbeitung geschieht entsprechend den üblichen Verfahren.

Beispiel 26

MM-Produkt in Art einer Crustazeenpastete

Bei diesem Beispiel wird eine gefrorene Emulsion und/oder Milcheis wie in Beispiel 25 beschrieben mit 1 kg Krabben-, Garneelen-, Krebs- oder Hummerfleisch oder Extrakten oder Teilen dieser oder anderer Meerestiere (z.B. Tintenfische, Octopoden oder dergleichen) verarbeitet. Falls erwünscht können in diese Mischung 500 g Rindfleisch oder 500 g Schweinefleisch oder 250 g Rindfleisch und 250 g Schweinefleisch eingearbeitet werden und zwar vorzugsweise in gefrorenem Zustand.

Beispiel 27

MM-Produkt in Art eines Hochleistungs-Produktes

Eine Emulsion wird hergestellt aus 20 Teilen Magermilch und/ oder Vollmilch, 33 Teilen Magermilchpulver und/oder Vollmilchpulver, 2,5 Teilen Butter, 2,5 Teilen Sonnenblumenöl sowie 2,0 Teilen Lebertran. Diese Mischung wird gründlich homogenisiert und gefroren.

Ein Fleisch-Grundbrät wird hergestellt aus 10 Teilen Rindfleisch und/oder Fisch, 10 Teilen Schweinefleisch und/oder Wildfleisch, 10 Teilen Geflügelfleisch, 10 Teilen Magermilch sowie 2oo g Kochsalz oder Nitritpökelsalz. Diese Masse wird gründlich homogenisiert und stark gekühlt oder gefroren.

60 Teile der fein zerkleinerten Emulsion sowie 40 Teile des fein zerkleinerten Bräts werden im Kutter gründlich vermischt und in üblicher Weise weiterverarbeitet. Beliebige Teile der Emulsion und/oder des Bräts können durch andere Lebensmittel wie Fisch, Cerealien, Frucht- oder Gemüsetrockenpulver etc. ersetzt werden.

Eine Würzung kann mit Sojaextrakt und/oder Suppen-Fleischextrakt durchgeführt werden. Bei einer Verwendung von Kochsalz kann zur Färbung Blutplasma und/oder rote Rübenextrakt und/oder ein ähnlicher natürlicher Farbstoff zugegeben werden.

Sowohl bei der Herstellung dieses MM-Produktes als auch bei den anderen Beispielen können selbstverständlich Vitamine, Mineralstoffe, Spurenstoffe und andere Wirkstoffe jeder Art zu einem geeigneten Zeitpunkt des Verfahrens zugegeben und eingearbeitet werden. Das Endprodukt kann in geeigneter üblicher Weise in ein Trockenprodukt bzw. Trockenpulver umgewandelt werden.

Beispiel 28

MM-Produkt in Art eines Gewürz-Käses

Eine Emulsion wird aus 11 Teilen Magermilch, 2,5 Teilen Magermilchpulver, 1 Teil Sonnenblumenöl und 0,5 Teilen Butter hergestellt. Diese Mischung wird im Kutter gründlich vermischt und gefroren.

16 Teile der oben hergestellten Emulsion wird fein zerkleinert und im Kochkutter bei Temperaturen von 4 bis 40° C (je nach Art des herzustellenden Produkts) mit 2 kg Gruyere-Käse-Abschnitte und/oder 2 kg Emmentaler und/oder 2 kg eines weiteren Hart- oder Weichkäses sowie mit Gewürzen, Pfeffer, Salze, Knoblauch, Wein, Kirschwasser und dergleichen versetzt. Diese Mischung wird gründlich emulgiert und kann je nach Art des erwünschten Produktes auf verschiedene Temperaturen bis zu 1oo° C erhitzt werden.

Beispiel 29

MM-Produkt in Art von Fleischklößchen oder Bratnockerl

Eine Emulsion wird hergestellt aus 5 kg Milch, 2 kg Magermilchpulver und 500 g Butter und/oder Sonnenblumenöl. Diese Masse wird im Kutter gründlich homogenisiert und gefroren.

4 kg der oben hergestellten gefrorenen Emulsion werden im Kutter fein zerkleinert und mit 10 kg magerem Rindfleisch, 6 kg Vollmilch, 500 g Magermilchpulver, 80 g Gewürzen, 40 g Glutamat und 200 g Natriumchlorid versetzt, gründlich vermischt und üblicherweise weiterverarbeitet.

Beispiel 30

Milchzubereitungen in Art von Diätproudkten

Zur Herstellung von MM-Produkten für diverse diätetische Erfordernisse, wie sie z. B. In den vorherigen Beispielen angegeben werden, müssen die in Frage kommenden Bestandteile in den entsprechenden Verfahrensstufen in modifizierter Form zugegeben und verarbeitet werden.

Um beispielsweise besonders fettarme Modifikationen der MM-Produkte zu erhalten, werden in den oben beschriebenen Beispielen 1 bis 29 anstelle des dort verwendeten Emulsionseis und Milcheis lediglich gefrorene Vollmilch, fettarme Milch, Magermilch, Mineralwasser, destilliertes Wasser, Buttermilch oder Molke verwendet. Eine weitere Fettreduzierung kann dadurch erreicht werden, indem besonders mageres Fleisch verwendet wird wie z. B. Schweinefilet, Rinderfilet, mageres Kalbfleisch, mageres Wildfleisch, mageres Geflügelfleisch, verschiedene magere Fischfleischsorten wie Forelle oder Seelachs und dergleichen mehr.

Zu diesem Zwecke wird zunächst die gefrorene Milchkomponente der Grundemulsion aus Magermilch, teilentrahmter Milch oder Vollmilch hergestellt und im Kutter fein zerkleinert.

1 bis 9 kg der gefrorenen, zerkleinerten Grundemulsion werden im Kutter mit 9 bis 1 kg der gefrorenen oder gekühlten oder in erforderlichen Zustand befindliche charakterisierende Zutat versetzt und eingearbeitet. Das gewählte Verhältnis der Anteile richtet sich nach der erwünschten Zusammensetzung des Endproduktes.

Die charakterisierende Zutat wird hergestellt, indem 10 kg mageres Rindfleisch im Wolf zerkleinert und dann im Kutter homogenisiert und dann gekühlt oder gefroren wird. Je nach Art des erwünschten erwünschten Produktes kann mit Milch oder Trinkwasser geschüttet werden und zwar vorzugsweise mit Schüttungen von 5 % bis 40 %.

Salzarme Diätmodifikationen (z.B. bei Hypertonie) werden dadurch erreicht, daß entweder der Natriumchloridzusatz soweit erwünscht reduziert wird oder spezielle oder neuartige Diätsalze verwendet werden. Ein Geschmacksausgleich kann durch die Würzung erreicht werden.

Eine besonders fettarme Pastete mit 3,5 % Fett wird hergestellt, indem in 6 kg einer aus Vollmilch hergestellten Grundemulsion 4 kg einer charakterisierenden Zutat, die aus 80 % sehr magerem Rindfleisch und 20 % teilentrahmter Milch hergestellt wurde, eingearbeitet wird (68 Anteile Milchbestandteile und 32 Anteile Fleischbestandteile).

Der Kohlenhydratanteil kann dadurch modifiziert werden,indem z. B. ultrafiltrierte Milch verwendet wird oder die erwünschten, kurz- und/oder langhaltigen Kohlenhydrate wie z. B. Fructose, Maltose, Lactose, Ballaststoffe, Rohfasermaterialien, Hemicellulosen oder dergleichen zugesetzt werden.

Bei den fettmodifizierten Grunddiätvarianten werden z. B. je nach Bedarf in der entsprechenden Verfahrensstufe zusätzlich einfach oder mehrfach ungesättigte Fettsäuren oder eine Spezialmischung wie Lebertran zugesetzt und eingearbeitet.

Für Diätmodifikationen, die in der Geriatrie oder Pädiatrie verwendet werden, sind bezüglich der verwendeten Zutaten und Zusatzstoffe sowie der bei der Verarbeitung entsprechende Maßnahmen zu treffen. In der Geriatrie sind z. B. die Bedürfnisse bezüglich der Electrolyte, Proteine, des Calciums und des Eisenbedarfs zu beachten.

Bei der Herstellung von pädiatrischen Modifikationen sind die essentiellen Bestandteile der MM-Produkte optimal einzustellen, die mögliche Folgen von über- und fehlernährten Kindern und Jugendlichen reduzieren oder weitgehendst verhindern. Diese Modifikationsmöglichkeiten sind naturgemäß von regionalen und sozialen Faktoren abhängig.

**Patentansprüche**

1. "Verfahren zur Herstellung von weitgehendst naturbelassenen, energie- und nährwerteinstellbaren Lebensmittel auf der Basis von Milch oder Milcherzeugnissen und Fleisch oder Fleischerzeugnissen, ggfs. unter Zusatz von Obsterzeugnissen, Getreideerzeugnissen und anderen Lebensmitteln und ggfs. unter Zusatz von Salzen, Gewürzen und Geschmackstoffen, durch Mischung dieser Bestandteile und worauf das so hergestellte Lebensmittel in üblicher Weise zu Frischprodukten, Produkten mit begrenz-

EP 0 172 245 B1

ter Haltbarkeit, Konserven, tiefgekühlten Produkten oder Trockenprodukten weiter verarbeitet wird, dadurch gekennzeichnet, daß die Lebensmittel ohne Verwendung chemisch bearbeiteter oder chemisch hergestellter Ausgangsstoffe und ohne Zusatz von Bindemitteln, Emulgatoren und Dickungsmitteln hergestellt werden, indem eine Grundemulsion/Grundmischungs-Zutat auf der Basis von Milch oder einer Milchemulsion ggfs. mit Vollmilch- oder Magermilchpulver und ggfs. eine Lipidkomponente in einem Kutter bearbeitet und/oder emulgiert und/oder homogenisiert wird, daß die so erzeugte Grundemulsion gründlich gefroren und anschließend zerkleinert wird, und daß eine oder mehrere solcher Grundemulsionen in einem Kutter mit der Zutat von Fleisch vermischt werden."

2. Verfahren nach Anspruch 1 dadurch gekennzeichnet, daß 98 - 2 % der Grundemulsion/Grundmischungszutat mit 2 % - 98 % der charakterisierenden Zutat verarbeitet werden.

3. Verfahren nach Ansprüchen 1 und 2, dadurch gekennzeichnet, daß 98 % - 51 % der gefrorenen Grundemulsionszutat mit 2 % - 49 % der gefrorenen charakterisierenden Zutat verarbeitet werden.

4. Verfahren nach Ansprüchen 1 bis 3 dadurch gekennzeichnet, daß die Grundemulsion/Grundmischungszutat, bestehend aus einer Milchkomponente und gegebenenfalls aus einer Fettkomponente besteht, wobei die Milchkomponente aus Vollmilch und/oder teilentrahmter Milch und/oder Magermilch und/oder Buttermilch und/oder Molke und/oder Vollmilchpulver (lösungen) und/oder Magermilchpulver(lösungen), und/oder Molkepulver(lösungen) und/oder Mischungen dieser Bestandteile besteht und die Fettkomponente aus tierischen Fetten und/oder wie Butter und/oder pflanzlichen Fetten und/oder ölen wie Sonnenblumenöl, Weizenkeimöl, Olivenöl, Lebertran und/oder sonstigen Lipiden und/oder Mischungen davon, besteht.

5. Verfahren nach Ansprüchen 1 bis 4, dadurch gekennzeichnet, daß in der gründlich homogenisierten Grundemulsion/Grundmischungszutat, bestehend aus Milch und/oder aus einer Milchemulsion (Milchkomponente und/oder Fettkomponente), die Komponenten in der Milchemulsion vorzugsweise in einem Gemischverhältnis von 99 % - 50 % Anteilen der Milchkomponente zu 1 % - 50 % Anteilen der Fettkomponente verarbeitet werden.

6. Verfahren nach Ansprüchen 1 bis 5, dadurch gekennzeichnet, daß das Mischverhältnis der tierischen Fettkomponenten zu den pflanzlichen Fettkomponenten etwa 1 : 99 bis 99 : 1 beträgt.

7. Verfahren nach Anspürüchen 1 bis 6, dadurch gekennzeichnet, daß die charakterisierende Zutat aus 2 % - 98 % stark gekühltem oder gefrorenem Fleisch und/oder anderen Lebensmitteln einschließlich Salzen und Gewürzen und aus 98% - 2 % stark gekühlter oder gefrorener Grundemulsions/Grundmischungszutat steht, wobei als Lebensmittel Fleisch-, Milch-, Fisch-, Getreide-, Gemüse-, Obst-, oder sonstige Nährmittel im Kutter in feinst zerkleinerter oder strukturierter Form verarbeitet und gekühlt oder gefroren werden und mit der stark gekühlten oder gefrorenen Grundemulsions/Grundmischungszutat der aus Magermilch und/oder teilentrahmter Milch und/oder Vollmilchpulverlösungen und/oder anderen Milchprodukten hergestellt worden ist, vermischt oder zusammengearbeitet wird.

8. Verfahren nach Ansprüchen 1 bis 7, dadurch gekennzeichnet, daß die gefrorene Milch bzw. Milchemulsion der Grundemulsion/Grundmischungszutat mit dem stark gekühlten oder gefrorenen Fleischbestandteil oder anderen Gemischbestandteilen der charakterisierenden Zutat in der Form von großen Fleisch- oder Gemischwürfeln oder eines grob- oder feinkörnigen Fleisch- oder Gemischgranulates im Kutter oder einer ähnlichen gründlich vermischenden oder homogenisierenden oder dispergierenden Vorrichtung vermischt/vereinigt werden, wobei bis zu 20 % des gefrorenen Fleisch- oder Gemischanteils durch schlachtwarmes Fleisch ersetzt werden kann und die so hergestellte Masse in üblicher Weise abgefüllt, geräuchert und/oder gegart und/oder sterilisiert oder sprüh- oder tiefgefriergetrocknet oder sprüh- oder walzengetrocknet wird.

9. Verfahren nach Ansprüchen 1 bis 8, dadurch gekennzeichnet, daß die Milch oder die Milchemulsion der Grundemulsion/Grundmischungszutat mit Milchsäurebakterien versetzt wird oder mittels eines Genußsäuresatzes wie Zitronensäure einer leichten Säuerung unterworfen wird.

10. Verfahren nach Ansprüchen 1 bis 9, dadurch gekennzeichnet, daß die Grundemulsion/Grundmischungszutat und die charakterisierende Zutat bei Temperaturen von -10 Grad bis +20 Grad Celsius und vorzugsweise bei Temperaturen von 0 - 10 Grad Celsius verarbeitet werden.

11. Verfahren nach Ansprüchen 1 bis 10, dadurch gekennzeichnet, daß in die Grundemulsion/Grundmischungszutat und/oder in die charakterisierende Zutat in einer geeigneten Verfahrensstufe Vitamine, Mineralstoffe, Spurenelemente und/oder sonstige Wirkstoffe und/oder Ballaststoffe eingearbeitet werden.

## Claims

1. A process for preparing largely genuine calorie and nutritional value adjustable food on the basis of milk or milk products and meat or meat products if occasion arises with addition of fruit products, cereal products, and other food products and if occasion arises under addition of salt, spices and flavours, and by mixing these ingredients and preparing the so prepared foods in conventional way to fresh products, products with limited storage life, preserves, freezed products or dry products, characterised by preparing the food without the use of chemically treated or chemically produced starting materials and without the addition of binding agents, emulgators and thickening agents, wherein a basic emulsion/ basic mixture-ingredient on the basis of milk or a milk emulsion, if occasion arises with whole milk powder or skimmed milk powder and if occasion arises with a the lipid ingredient is treated and/or emulgated and/or homogenized in a cutter, the so prepared basic emulsion is thoroughly frozen and subsequently comminuted, and wherein one or several of these basic emulsions are mixed in a cutter with a meat ingredient.

2. A process according to Claim 1 characterised by processing 98 - 2 % of the basic emulsion/basic mixture-ingredient with 2 % - 98 % of the characterising ingredient.

3. A process according to claims 1 und 2, characterised by processing 98 % - 51 % of the frozen basic emulsion-ingredient with 2 % - 49 % of the frozen characterising ingredient.

4. A process according to claims 1 - 3, wherein the basic emulsion/basic mixture-ingredient is comprising a milk component and if occasion arises a lipid component, whereby the milk component is comprising whole milk and/or partiallyc skimmed milk and/or skimmed milk and/or butter milk and/or whey and/or whole milk powder (solutions) and/or skimmed milk powder (solutions), and/or whey powder (solutions) and/or mixtures of these ingredients, and the lipid component is comprising animal lipids (fat) and/or butter and/or vegetable lipids (fat) and/or oils like sunflower oil, wheat seed-bud oil, olive oil, cod-liver oil and/or other lipids and/or mixtures thereof.

5. A process according to claims 1-4, characterised that in the thoroughly homogenized basic emulsion/basic mixture-ingredient, comprising milk and/or milk emuslion (milk component and/or fat component), the components in the milk emulsion are preferably processed in a mixture ratio of 99 % - 50 % parts of the milk component to 1 % - 50 % parts of the fat components.

6. A process according to Claims 1 - 5 , wherein the mixture ratio of the animal fat component to the vegetable fat component is about 1 : 99 to 99 : 1.

7. A process according to Claims 1 - 6, wherein the characterising ingredient is comprising 2 % - 98 % of a strongly cooled or frozen meat and/or other foodstaffs enclosing salt and spices and/or 98 % - 2 % of a strongly cooled or frozen basic emulsion/basic mixture-ingredient, whereby meat products, milk products, fish products, cereal products, vegetable products, fruit products or other nutritive substances are used as food stuffs and processed in a finally comminuted and/or coarsly comminuted form and/or in a form of structured parts and cooled or frozen and mixed or processed with the strongly cooled or frozen basic emulsion/basic mixture-ingredient prepared of skimmed milk and/or partially skimmed milk and/or milk powder solutions and/or other milk products.

8. A process according to Claims 1 - 7, characterised by mixing/combining the frozen milk or milk emulsion of the basic emulsion/basic mixture-ingredient with a strongly cooled or frozen meat ingredient or other mixture ingredients of the characterising ingredient in the form of big meat/or fine grained mixture granulate in a cutter or in a similar thouroughly mixing or homogenizing or disperging device, wherein up to 20 % of the frozen meat or mixture parts are substituted by freshly slaughtered warm meat and the so prepared mass is filled and/or smoked and/or boiled and/or sterilized or dried by spraying or deep cooling or dried by spraying or drying on a roll.

9. A process according to Claims 1 - 8, wherein the milk or the milk emulsion of the basic emulsion/basic mixture-ingredient is mixed with milk acid bacteria or is subjected to a slight acidification with help of a food staff acid as citric-acid.

10. A process according to Claims 1-9, wherein the basic emulsion/basic mixture ingredient and the characterising ingredient are processed at temperatures of -10 o Celsius to + 20 o Celsius and preferably by temperatures of 0 o to 10 o Celsius.

11. A process according to Claims 1 - 10, characterised by incorporating in the basic emulsion/basic mixture-ingredient and/or in the characterising ingredient at an appropriate procedure phase vitamines, mineral substances, trace elements and/or other active agents and/or ballast ingredients.

## Revendications

1. Procédé pour la préparation de produits alimentaires laissés á l'état naturel dans le plus large mésure possible a valeur énérgetique et nutritive réglable, a laitiers base du lait, de produits laitiers, de la viande, de produits carnés, eventuellement avec l'addition des produits de fruits, de produits céréales, et des autres produits alimentaires, et eventuellement avec l'addition du sel, de condiments et ou de matiere du gout, par mélanger les ingredients et que ce produit est continué d'être traitée dans une maniere conventionelle pour préparer des produit fraîche, de produits avec conservation limitée, de produits de conserve, de produits congelés ou de produits séches/lyophilisés, le dit procédé est caracterisée en ce qu on les produits sont préparé sans utilisation d'agents initial être chimique ou être préparé chimique et sans d'agents liants, d'émulsionnements ou d'épaisissants, addition en ce que une émulsion fundamentale/mixture fundamentale- ingrédient a base du lait ou a base du émulsion du lait le cas écheant avec de poudre du lait ou de poudre du lait maigre et le cas echeant avec de poudre du lait ou de poudre du lait maigre et le cas écheant avec un composante lipide est traîte et/ou émulgé et/ou homogenisé dans un cutter, et que se émulsion fondamentale est congelé a fond et/concassé suivant, et que une ou plusiers de ces émulsions fondamentales sont mélangé dans un cutter avec de la viande.

2. Procédé selon la revendication 1, caracterisé en ce que 98% - 2 %. de 1 emulsion fondamentale/mixture fondamentale ingrédient sont traité avec 2 % - 98 % de 1 ingrédient caracterisant.

3. Procédé selon les revendications 1 et 2, caracterisé en ce que 98 % - 51 % de la émulsion fondamentale congélé sont traité avec 2 % - 49 % de l' ingrédient caracterisant congelé.

4. Procédé suivant les revendications 1 - 3 , caracterisé en ce que la émulsion fondamentale/mixture fondamentale-ingrédient est composée du lait et le cas écheant d'une lipid, a l' occasion de quoi la composante du lait est preparé du lait et/ou de lait maigre partielle et/ou de lait maigre et/ou de petit lait et/ou de petit lait du beurre et/ou de (solution de) poudre du lait et/ou de (solution de) poudre du lait maigre et/ou de (solution) poudre de petit lait (de beurre) et/ou de mixture de ces composantes , et que la composante du lipides est un lipide animal et/ou de la beurre et/ou de lipid végétale et/ou de huiles de tournesol, de l'huiles de froment, de l'huiles de olives ou de l'huiles de fois de morue ou des autres l'huiles ou de mixture des lipides.

5. Procédé selon les revendications 1 - 4 caracterisée que dans la émulsion fondamentale/mixture fondamentale homogenisé a fond, composé du lait et/ou d une émulsion du lait (composante du lait et/ou composante de lipid), les composantes dans la émulsion du lait en préférence son traité dans un proportion de mixture de 99 % - 50 % parts de composante du lait a 1 % - 50 % parts de composante des lipides.

6. Procédé selon les revendications 1 - 5 caracterisé en ce que la relation mixture de composante de lipide animal á composante de lipid vegetale et 1 : 99 a 99 : 1.

7. Procédé selon les revendications 1 - 6 caracterisé en ce que en l'ingrédient caracterisante se composé de 2 % - 98 % de la viande bien rafraîchit ou congelé et du l'autre produits alimentaires avec du sel et des épice, et de 98 % - 2 % d une émulsion fondamentale/mixture fondamentale-ingrédient bien refraîchit ou congelé, á l' occasion de quoi on prend comme des aliments de la viande, du lait, des poissons, des céréales, des legumes, et/ou de fruits ou des autres produits alimentaire sous form finement concassé et/ou grossierement concassé a l'état congelé et ou les melange avec l'émulsion fondamentale/mixture fondamentale-ingrédient, composé de lait maigre ou de lait partitialement maigre et/ou des solutions du lait du poudre et/ou des autres produit du lait.

8. Procédé selon les revendications 1 - 7 caracterisé en ce que le lait ou la émulsion du lait congelé de la émulsion fondamentale/mixture fondamentale est melange/continué avec la viande bien refraîchit ou congelé ou avec les autres composantes de la mixture de l'ingrédient-caracterisant en forme dans une cutter ou dans une autre dispositif bien mélangant ou homogenisant ou dispergant, en ce que jusqu' an 20 % de la viande ou de la melangé congelé sont substitue de la viande chaud a l'abattage, et que la masse ainsi preparé est ensaché, fumé, echaudé et/ou sterilisé et/ou séché et pulverisé en mode conventionelle.

9. Procédé selon les revendications 1 - 8 caracterisé en ce que le lait ou la émulsion du lait de la émulsion fondamentale/mixture fondamentale-ingrédient sont melangé avec de bactéries d'acide lactique ou avec d'acide citrique.

10. Procédé selon les revendications 1 - 9 caracterisé en ce que la émulsion fondamentale et l'ingredient characterisant sont traîté dans un intervale du temperature compris entre -10 o Célsius a + 20 o Célsius et en préférence dans un temperature compris entré O o Célsius - 10 o Célsius.

11. Procédé selon les revendications 1 - 10 caracterisé en ce que dans la émulsion fondamentale et/ou la composante caractérisante dans une étappe du procédé sont incorporés des vitamines, des minérales, des éléments de traces ou des autres éléments actives ou des éléments de ballast.